# EUROPÄISCHE PATENTSCHRIFT

(11) **EP 1 832 411 B1**
(45) Veröffentlichungstag und Bekanntmachung des Hinweises auf die Patenterteilung: **21.07.2010**
(21) Anmeldenummer: 07003465.7
(22) Anmeldetag: 20.02.2007
(51) Int. Cl.: B29D 22/00, F16F 9/04

(54) **Membran und Luftfeder**
Diaphragm and pneumatic spring
Membrane et coussin d'air

(30) Priorität: 09.03.2006 DE 102006011369; 22.03.2006 DE 102006013075
(43) Veröffentlichungstag der Anmeldung: 12.09.2007
(73) Patentinhaber: Carl Freudenberg KG, 69469 Weinheim (DE)
(72) Erfinder: Németh, Jòzsef, Nyíregyháza 4400 (HU); Kriston, Zoltán, Nagykálló 4320 (HU); Harsányi, Zsolt, 4405 Nyíregyháza (HU); Elek, László, Nagyhalász 4485 (HU); Szilágyi, Attila, Nyiregyhaza 4400 (HU)

(56) Entgegenhaltungen:
- EP-A- 0 199 952
- EP-A- 0 660 007
- DE-A1- 3 318 060
- DE-A1- 10 313 696
- DE-U- 1 891 998
- US-A- 3 435 734

## Beschreibung

### Technisches Gebiet

Die Erfindung betrifft eine Membran gemäß dem Oberbegriff des Patentanspruchs 1. Die Erfindung betrifft des Weiteren eine Luftfeder mit einer Membran.

### Stand der Technik

Membranen und Luftfedern der eingangs genannten Art sind aus dem Stand der Technik bereits bekannt Die gattungsbildenden Luftfedern weisen im Hinblick auf ihre Qualität und Lebensdauer erhebliche Nachteile auf. Diese Nachteile werden insbesondere durch die Fertigung der Membranen bedingt.

Bei der Herstellung von Membranen wird eine Vulkanisierung des Membranmaterials durchgeführt. Bei der Vulkanisierung kann sehr leicht Luft zwischen die beim Vulkanisieren verwendete Form und das Membranmaterial gelangen. Während des Aushärtungsprozesses kann diese Luft zu Unebenheiten auf der Oberfläche der Membran führen. Diese Unebenheiten werden insbesondere durch Blasenbildung bei Lufteinschlüssen bedingt.

Um dem zu begegnen, bestreichen einige Hersteller die Membran vor der Vulkanisierung mit Lösungen. Diese Lösungen bestehen aus Materialien, welche die Oberfläche des Membranmaterials spröde machen. Wenn nun eine Form an die Membran angelegt wird, kann die Luft nach dieser Behandlung auf Grund der Sprödigkeit der Oberfläche leicht entweichen.

Ein anderes Verfahren sieht vor, die Membran mit Gummipulver zu bestreuen. Hierbei ist nachteilig, dass dieses Material während der Vulkanisierung in die Oberfläche der Membran gelangt und es zu Brüchen des vulkanisierten Membranmaterials kommen kann. Hierdurch wird der Alterungsprozess einer Membran stark beschleunigt.

Weitere Verfahren sehen vor, eine Form mit einem Oberflächenmuster zu versehen, welches Kanäle bildet, durch die die Luft aus der Form entweichen kann. Hierbei ist nachteilig, dass die Oberfläche der Membran stark und tief strukturiert wird. Diese Strukturierung beschleunigt die Bildung von Brüchen während der Verwendung der Membran. Auch hierdurch wird der Alterungsprozess einer Membran stark beschleunigt.

Aus der DE 33 18 060 A1 ist eine Membran bekannt, die einen einzigen Schulterbereich zeigt, auf dem Erhebungen in Form linienhaft zusammenhängender Rippen ausgebildet sind. Aus der DE 103 13 696 A1 ist eine Membran bekannt, die als Faltenbalg mit einem ersten Bund und einem zweiten Bund ausgestaltet ist. Auf dieser sind Erhebungen in koaxialen Kreisen ausgebildet. Aus der EP 0 660 007 A1 ist eine Membran bekannt, die Erhebungen im Bereich 0,4 bis 0,9 mm zeigt. Aus der EP 0 199 952 A ist eine Membran mit den Merkmalen des Oberbegriffs des Patentanspruchs 1 bekannt.

### Darstellung der Erfindung

Der Erfindung liegt daher die Aufgabe zu Grunde, eine Luftfeder zu schaffen, bei der ein problemloser Betrieb bei langer Lebensdauer gewährleistet ist. Erfindungsgemäß wird die vorangehende Aufgabe durch eine Membran mit den Merkmalen des Patentanspruchs 1 gelöst. Danach ist eine Membran gekennzeichnet durch Schultern, zwischen denen die Struktur angeordnet ist, wobei sich an die Struktur im Bereich der Schultern zweite Strukturen anschließen, die sich von der ersten Struktur unterscheiden, und wobei die zweiten Strukturen Erhebungen aufweisen, die maximal 0,5 mm von der Oberfläche abragen.

Erfindungsgemäß ist erkannt worden, dass bei dieser Auswahl der Höhe der Erhebungen die Lebensdauer der Membran deutlich erhöht werden kann. Des Weiteren ist erkannt worden, dass die Wahl einer Strukturierung mit dieser Dimensionierung ein problemloses Entformen der Membran aus der Form nach der Vulkanisierung erlaubt. Es ist insbesondere erkannt worden, dass die Oberfläche der Membran nicht durch Blasenbildung in Folge von Lufteinschlüssen in ihrer Qualität beeinflusst wird und auch bei starker Belastung durch häufige Deformierung keine Sollbruchstellen ausbildet. Insoweit ist durch die Wahl der erfindungsgemäßen Dimensionierung eine Membran geschaffen, welche sich durch erhöhte Lebensdauer auszeichnet und insoweit eine problemlose Verwendung in Luftfedern ermöglicht.

Die Membran weist Schultern auf, zwischen denen die Struktur angeordnet ist. Diese Ausgestaltung eignet die Membran für die Verwendung in einer Luftfeder.

An die Struktur im Bereich der Schultern schließen sich zweite Strukturen an, die sich von der ersten Struktur unterscheiden. Diese konkrete Ausgestaltung erlaubt es, einzelne Bereiche der Membran an unterschiedliche Belastungen anzupassen. Hierdurch kann die Lebensdauer der Membran erhöht werden. In einem Bereich, der fein gemasert ist, kann die Membran äußerst weich und elastisch ausgebildet, in weiteren, grob gemaserten Bereichen, kann die Membran hart und stabil ausgestaltet sein.

Die zweiten Strukturen weisen Erhebungen auf, die maximal 0,5 mm von der Oberfläche abragen. Diese Ausgestaltung erlaubt eine problemlose Entformbarkeit der Membran in stark gewölbten Bereichen, nämlich den Schultern, und stellt zugleich einen sehr stabilen Schulterbereich sicher.

Folglich ist die eingangs genannte Aufgabe gelöst.

Die Erhebungen könnten 0,05 mm von der Oberfläche des Grundkörpers abragen. Die Auswahl dieser Dimensionierung erlaubt eine besonders feine Maserung der Oberfläche der Membran. Diese Dimensionierung stellt gerade noch sicher, dass die Oberfläche nicht durch Lufteinschlüsse beeinträchtigt wird.

Die Maserung der Struktur kann Riefen oder verzweigte, dendritartige Strukturen umfassen, die durch Täler von einander getrennt sind. Je nach der Feinheit der Maserung und der Höhe der Erhebungen - nämlich die höchsten Punkte der dendritartigen Strukturen - können die Stabilität des Grundkörpers der Membran sowie dessen Rückstellvermögen bei Deformierung eingestellt werden.

Die Kanten der Erhebungen oder die Erhebungen selbst könnten abgerundet sein. Hierdurch ist sicher gestellt, dass keine Sollbruchstellen geschaffen werden, wenn die Membran gebeugt oder geknickt wird. Eine Erhebung, welche mit der Oberfläche einen nahezu rechten Winkel einschließt, bildet eine Risskante, welche bei Bewegung und/oder Deformierung der Membran leicht zum Einreißen neigt. Durch die Abrundung der Erhebungen in deren Basisbereich wird die Bildung von Sollbruchstellen oder Sollrissstellen wirksam verhindert. Die Abrundung im Kantenbereich bewirkt ein nahezu widerstandfreies und leichtes Abrollen der Membran an anliegenden Teilen.

Die Struktur könnte aus dem Material des Grundkörpers bestehen und mit diesem integral ausgebildet sein. Diese konkrete Ausgestaltung erlaubt die

Verwendung eines einheitlichen Materials und erlaubt somit eine kostengünstige und schnelle Fertigung der Membran.

Der Grundkörper könnte aus einem elastischen Material gefertigt sein. Die Verwendung eines elastischen Materials erlaubt die Verwendung der Membran als Dichtungsbalg. Der Dichtungsbalg könnte zwei Körpern zugeordnet sein, welche sich relativ zueinander bewegen. Hierbei wird der Dichtungsbalg bzw. die Membran deformiert. Die Verwendung eines elastischen Materials ist für diese Anwendung besonders vorteilhaft, da dieses ein hohes Rückstellvermögen bei Deformierung aufweist.

Als elastisches Material könnte Gummi verwendet werden. Gummi stellt einen Werkstoff dar, der sich im Hinblick auf seine chemische Resistenz und Stabilität als besonders vorteilhaft erwiesen hat.

Der Grundkörper könnte zylindrisch ausgebildet sein. Diese konkrete Ausgestaltung macht eine Verwendung der Membran als Tülle oder Dichtungsbalg zugänglich. Die Membran kann zylindrisch ausgebildeten Körpern wie Kolben oder Stempeln zugeordnet werden.

Die eingangs genannte Aufgabe wird des Weiteren mit einer Luftfeder gemäß Patentanspruch 7 gelöst.

Um Wiederholungen in Bezug auf die erfinderische Tätigkeit zu vermeiden, sei auf die Ausführungen zur Membran als solcher verwiesen.

Die Verwendung einer Membran in einer Luftfeder erlaubt es, Luftfedern zu schaffen, welche sich durch eine erhöhte Lebensdauer auszeichnen. Die Luftfedern könnten in Kraftfahrzeugen, insbesondere in Achssystemen von Kraftfahrzeugen, Verwendung finden. Die Luftfeder eignet sich besonders für diese Verwendung, da Bauteile in Achssystemen häufigen Lastwechseln ausgesetzt sind, wodurch die Membran ständigen Bewegungen und Deformierungen unterworfen wird. Herkömmliche Membranen können diesen Belastungen nur eine begrenzte Zeit standhalten. Die erfindungsgemäße Membran und die erfindungsgemäße Luftfeder weisen eine deutlich höhere Lebensdauer als die gattungsbildenden Membranen und Luftfedern auf und können daher zur Schaffung von Achssystemen mit einer hohen Lebensdauer verwendet werden.

Bei der konkreten Verwendung der Membran als Luftfederbalg könnte der mittlere Bereich des Luftfederbalgs bzw. der Membran - der Bereich zwischen den Schultern einer Luftfeder - strukturiert sein. Dieser Bereich wird besonders stark durch Deformierungen und Bewegungen der beweglichen Luftfederteile ausgebeult und damit deformiert. Die oben genannten Dimensionierungen der Struktur stellen sicher, dass der Luftfederbalg auch im Bereich zwischen den Schultern einer Luftfeder nicht ausreißt und/ oder zu Sollbruchstellen neigt. Bei den bekannten Luftfedern ist der Bereich zwischen den Schultern der Luftfeder nicht strukturiert ausgebildet, um Sollbruchstellen zu vermeiden.

Es gibt nun verschiedene Möglichkeiten, die Lehre der vorliegenden Erfindung auf vorteilhafte Weise auszugestalten und weiterzubilden. Dazu ist einerseits auf die nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: eine Luftfeder, umfassend eine Membran mit einem Grundkörper, welcher strukturierte Oberflächen aufweist,
- Fig. 2: eine Detailansicht des Bereichs F gemäß Fig. 1,
- Fig. 3: eine Detailansicht des Bereichs G gemäß Fig. 1,
- Fig. 4: eine fotografische Darstellung der Struktur des Bereichs F und
- Fig. 5: eine fotografische Darstellung der Struktur des Bereichs G.

### Ausführung der Erfindung

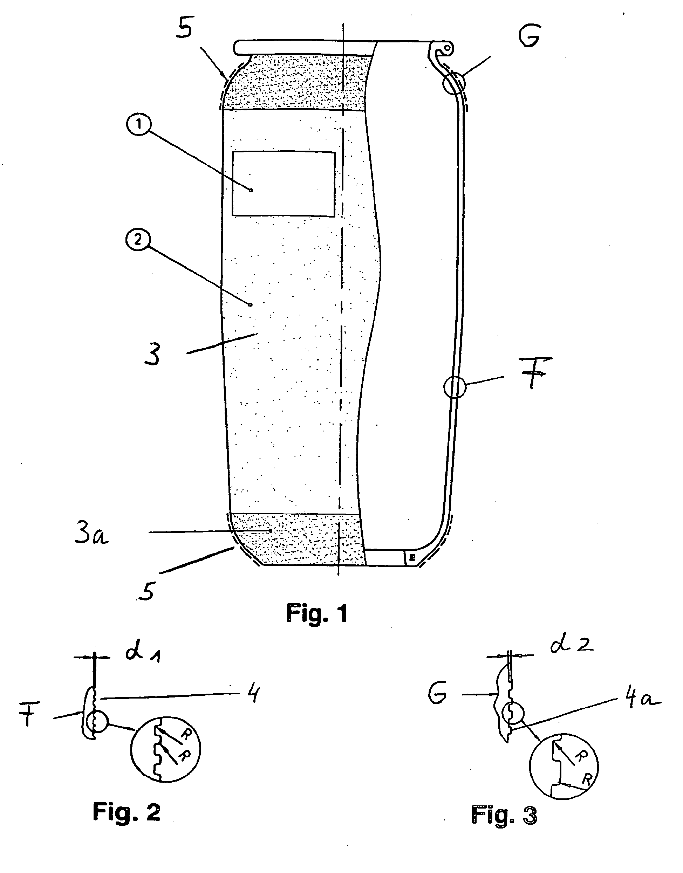

Fig. 1 zeigt eine Membran, mit einem Grundkörper 1, wobei der Grundkörper 1 eine Oberfläche 2 aufweist. Dem Grundkörper 1 sind zumindest bereichsweise Strukturen 3, 3a zugeordnet, welche Erhebungen 4, 4a aufweisen. Die Erhebungen 4, 4a ragen jeweils mit einer maximalen Höhe von der Oberfläche 2 ab.

Fig. 2 zeigt in einer Detailansicht den Bereich F gemäß Fig. 1. Die Erhebungen 4 der Struktur 3 ragen maximal 0,1 mm und vorzugsweise 0,05 mm von der Oberfläche 2 des Grundkörpers 1 ab. Die Erhebungen 4 bewegen sich folglich im Bereich d1 zwischen 0,05 und 0,1 mm. Die Kanten und Fußpunkte der Erhebungen 4 sind abgerundet. Der Krümmungsradius ist mit R bezeichnet.

Die Struktur 3 besteht aus dem Material des Grundkörpers 1 und ist mit diesem integral ausgebildet. Der Grundkörper 1 ist aus einem elastischen Material, nämlich Gummi, gefertigt.

Der Grundkörper 1 ist zylindrisch ausgebildet, so dass die Membran als Luftfederbalg einer Luftfeder Verwendung findet. Die Membran ist im Bereich zwischen den Schultern 5 einer Luftfeder strukturiert ausgebildet. In diesem sich länglich erstreckenden Bereich, der überwiegend tonnenförmig ausgestaltet ist, ist die Struktur 3 gemäß Fig. 2 ausgebildet.

Fig. 3 zeigt in einer Detailansicht den Bereich G gemäß Fig. 1. Die Erhebungen 4a der Struktur 3a ragen maximal 0,5 mm von der Oberfläche 2 des Grundkörpers 1 ab. Die Erhebungen 4a bewegen sich im Bereich d2 zwischen 0,3 und 0,5 mm. Die Kanten und Fußpunkte der Erhebungen 4a sind abgerundet. Der Krümmungsradius ist mit R bezeichnet. Im Bereich der Schultern 5 ist die Struktur 3a gemäß Fig. 3 ausgebildet. Der Bereich G ist streifenförmig ausgebildet und unterscheidet sich strukturell vom Bereich F.

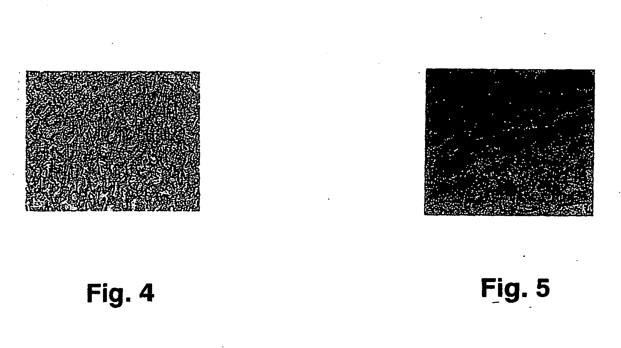

Fig. 4 zeigt eine Fotografie des Bereichs F, nämlich eine feine Maserung, Fig. 5 des Bereichs G, welcher grob gemasert ist.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen. Abschließend sei ganz besonders hervorgehoben, dass das zuvor rein willkürlich gewählte Ausführungsbeispiel lediglich zur Erörterung der erfindungsgemäßen Lehre dient, diese jedoch nicht auf dieses Ausführungsbeispiel einschränkt.

## Patentansprüche

1. Membran, umfassend einen Grundkörper (1), wobei der Grundkörper (1) eine Oberfläche (2) aufweist, wobei dem Grundkörper (1) zumindest bereichsweise eine Struktur (3) zugeordnet ist, wobei die Struktur (3) Erhebungen (4) aufweist, die mit einer maximalen Höhe von der Oberfläche (2) abragen, **dadurch gekennzeichnet, dass** die Erhebungen (4) maximal 0,1 mm von der Oberfläche (2) abragen, und weiter **gekennzeichnet durch** Schultern (5), zwischen denen die Struktur (3) angeordnet ist, wobei sich an die Struktur (3) im Bereich der Schultern (5) zweite Strukturen (3a) anschließen, die sich von der ersten Struktur (3) unterscheiden, und wobei die zweiten Strukturen (3a) Erhebungen (4a) aufweisen, die maximal 0,5 mm von der Oberfläche (2) abragen

2. Membran nach Anspruch 1, **dadurch gekennzeichnet, dass** die Erhebungen der Struktur (3) (4) maximal 0,05 mm von der Oberfläche (2) des Grundkörpers (1) abragen.

3. Membran nach Anspruch 1 oder 2, **dadurch gekennzeichnet, dass** die Kanten der Erhebungen (4) der Struktur (3) abgerundet sind.

4. Membran nach einem der Ansprüche 1 bis 3, **dadurch gekennzeichnet,**
**dass** die Struktur (3) aus dem Material des Grundkörpers (1) besteht und mit diesem integral ausgebildet ist.

5. Membran nach einem der Ansprüche 1 bis 4, **dadurch gekennzeichnet,**
**dass** der Grundkörper (1) aus einem elastischen Material gefertigt ist.

6. Membran nach einem der Ansprüche 1 bis 5, **dadurch gekennzeichnet,**
**dass** der Grundkörper (1) zylindrisch ausgebildet ist.

7. Luftfeder, umfassend eine Membran nach einem der Ansprüche 1 bis 6.

## Claims

1. Diaphragm, comprising a basic body (1), wherein the basic body (1) has a surface (2), wherein the basic body (1) is assigned a structure (3) at least in regions, wherein the structure (3) has bumps (4) which protrude with a maximum height from the surface (2), **characterized in that** the bumps (4) protrude at a maximum of 0.1 mm from the surface (2), and furthermore **characterized by** shoulders (5) between which the structure (3) is arranged, the structure (3) being adjoined in the region of the shoulders (5) by second structures (3a) which differ from the first structure (3), and the second structures (3a) having bumps (4a) which protrude at a maximum of 0.5 mm from the surface (2).

2. Diaphragm according to Claim 1, **characterized in that** the bumps (4) of the structure (3) protrude at a maximum of 0.05 mm from the surface (2) of the basic body (1).

3. Diaphragm according to Claim 1 or 2, **characterized in that** the edges of the bumps (4) of the structure (3) are rounded.

4. Diaphragm according to one of Claims 1 to 3, **characterized in that** the structure (3) is composed of the material of the basic body (1) and is formed integrally therewith.

5. Diaphragm according to one of Claims 1 to 4, **characterized in that** the basic body (1) is manufactured from an elastic material.

6. Diaphragm according to one of Claims 1 to 5, **characterized in that** the basic body (1) is of cylindrical design.

7. Pneumatic spring comprising a diaphragm according to one of Claims 1 to 6.

## Revendications

1. Membrane, comprenant un corps de base (1), dans laquelle le corps de base (1) présente une surface (2), dans laquelle une structure (3) est associée au moins localement au corps de base (1), dans laquelle la structure (3) présente des protubérances (4) qui sortent avec une hauteur maximale de la surface (2), **caractérisée en ce que** les protubérances (4) sortent au maximum de 0,1 mm de la surface (2), et **caractérisée en outre par** des épaulements (5), entre lesquels la structure (3) est disposée, dans laquelle des deuxièmes structures (3a), qui se distinguent de la première structure (3), se raccordent à la structure (3) dans la région des épaulements (5), et dans laquelle les deuxièmes structures (3a) présentent des protubérances (4a), qui sortent au maximum de 0,5 mm de la surface (2).

2. Membrane selon la revendication 1, **caractérisée en ce que** les protubérances (4) de la structure (3) sortent au maximum de 0,05 mm de la surface (2) du corps de base (1).

3. Membrane selon la revendication 1 ou 2, **caractérisée en ce que** les arêtes des protubérances (4) de la structure (3) sont arrondies.

4. Membrane selon l'une quelconque des revendications 1 à 3, **caractérisée en ce que** la structure (3) se compose du matériau du corps de base (1) et est formée intégralement avec celui-ci.

5. Membrane selon l'une quelconque des revendications 1 à 4, **caractérisée en ce que** le corps de base (1) est fabriqué en un matériau élastique.

6. Membrane selon l'une quelconque des revendications 1 à 5, **caractérisée en ce que** le corps de base (1) est de forme cylindrique.

7. Coussin d'air, comprenant une membrane selon l'une quelconque des revendications 1 à 6.
